# EUROPÄISCHE PATENTANMELDUNG

(11) **EP 1 273 952 A2**
(43) Veröffentlichungstag der Anmeldung: **08.01.2003**
(21) Anmeldenummer: 02100769.5
(22) Anmeldetag: 01.07.2002
(51) Int. Cl.: G02B 21/00

(54) **Konfokales Mikroskop**

(30) Priorität: 06.07.2001 DE 10133017
(71) Anmelder: Leica Microsystems Wetzlar GmbH, 35578 Wetzlar (DE)
(72) Erfinder: Sure, Thomas, Dr., 35641 Schöffengrund (DE)
(74) Vertreter: Reichert, Werner F., Dr.

(57) **Zusammenfassung**

Die vorliegende Erfindung betrifft ein konfokales Mikroskop, mit einem Beleuchtungsstrahlengang (1) einer Lichtquelle (2), einem Detektionsstrahlengang (3) eines Detektors (4), einer Scaneinrichtung (5), einem den Beleuchtungsstrahlengang (1) und den Detektionsstrahlengang (3) vereinigenden bzw. trennenden Mittel (6) und einem Objektiv (7), bei dem sowohl eine Objekt-Auflichtbeleuchtung als auch eine Objekt-Durchlichtbeleuchtung möglich ist. Das erfindungsgemäße konfokale Mikroskop ist dadurch gekennzeichnet, dass zum Umschalten von einer durch das Objektiv (7) erfolgenden Objekt-Auflichtbeleuchtung auf eine in Richtung des Objektivs (7) erfolgenden Objekt-Durchtlichtbeleuchtung auf der dem Objektiv (7) abgewandten Seite der Objektebene (9) Strahlumlenkmittel (10) und gegebenenfalls Strahlformmittel einbringbar sind.

## Beschreibung

Die vorliegende Erfindung betrifft ein konfokales Mikroskop, mit einem Beleuchtungsstrahlengang einer Lichtquelle, einem Detektionsstrahlengang eines Detektors, einer Scaneinrichtung, einem den Beleuchtungsstrahlengang und den Detektionsstrahlengang vereinigenden bzw. trennenden Mittel und einem Objektiv.

Konfokale Mikroskope der gattungsbildenden Art sind seit geraumer Zeit bekannt und wurden erstmals in US 3,013,467 beschrieben und beispielsweise in DE 3 821 403 A1 das erste Mal praktisch realisiert. Hierbei wird Licht, dass eine sogenannte Nipkow-Disk passiert, zur punktförmigen, konfokalen Beleuchtung eines Objekts verwendet. Das am Objekt reflektierte Licht durchläuft den Strahlengang des Mikroskops in umgekehrter Richtung und das die Nipkow-Disk ein zweites Mal passierende Licht kann von einem Detektor bzw. vom Auge des Mikroskopbedieners detektiert bzw. wahrgenommen werden. Hierbei wirken die punktförmigen Lochblenden der Nipkow-Disk als konfokale Punktlichtquelle bzw. als konfokale Detektionslochblenden.

Aus der EP 727 684 A2 ist ein konfokaler optischer Scanner bekannt, bei dem ebenfalls eine Nipkow-Disk eine konfokale Beleuchtung bzw. Detektion realisiert. Der dort vorgesehenen Nipkow-Disk ist auf der der Lichtquelle zugewandten Seite eine Kollektor-Disk mit Mikrolinsen zugeordnet, die das Beleuchtungslicht einer Lichtquelle auf die Lochblenden bzw. Pinholes der Nipkow-Disk fokussiert. Hierdurch kann die Lichtmenge des durch die Pinholes der Nipkow-Disk gelangenden Lichts erhöht werden.

Konfokale Mikroskope, die einen konfokalen Scheibenscanner aufweisen, werden insbesondere zur Real-Time-Mikroskopie eingesetzt, da durch eine Rotation des konfokalen Scheibenscanners mit einer hohen Drehzahl sehr schnell konfokale Bilder eines Objekts detektiert werden können.

Aus der DE 44 37 896 C1 ist ein Scheibenscanner für ein konfokales Mikroskop bekannt, wobei sowohl das für die Beleuchtung dienende Licht einer Lichtquelle als auch das vom Objekt kommende Detektionslicht an dem Scheibenscanner reflektiert wird. Auch hierbei wirken die reflektierenden Strukturen des Scheibenscanners als konfokale Punktlichtquellen bzw. Detektionslochblenden.

Aus der DE 196 54 210 A1 ist eine optische Anordnung zum Scannen eines Lichtstrahls bekannt, mit der konfokale Bilder nahezu in Videogeschwindigkeit gescannt werden können. Ein mit einer solchen Scananordnung versehenes konfokales Mikroskop weist üblicherweise Beleuchtungs- und/oder Detektionslochblenden auf, die für die Konfokalität verantwortlich sind.

Insbesondere bei den Mikroskopen mit konfokalen Scheibenscannern ist bislang nur eine durch das Mikroskopobjektiv erfolgende Auflichtbeleuchtung üblich. Eine konfokale Durchlichtbeleuchtung zur Detektion transparenter Objekte ist nicht ohne weiteres möglich. Dennoch könnte ein Beleuchtungsstrahlengang vorgesehen sein, der eine Lichtquelle und einen ersten konfokalen Scheibenscanner umfasst, der das Objekt von der dem Objektiv abgewandten Seite der Objektebene her konfokal beleuchtet. Das vom Objekt kommende Licht würde zur konfokalen Detektion das Objektiv und einen zweiten konfokalen Scheibenscanner passieren, wobei der erste Scheibenscanner zum zweiten Scheibenscanner synchron drehen müsste. Diese Vorgehensweise ist aufwändig, schwer zu justieren und nimmt darüber hinaus viel Platz in Anspruch.

Der vorliegenden Erfindung liegt daher die Aufgabe zugrunde, ein konfokales Mikroskop der gattungsbildenden Art anzugeben und weiterzuentwickeln, bei dem sowohl eine Objekt-Auflichtbeleuchtung als auch eine Objekt-Durchlichtbeleuchtung möglich ist.

Das erfindungsgemäße konfokale Mikroskop der gattungsbildenden Art löst die voranstehende Aufgabe durch die Merkmale des Patentanspruchs 1. Danach ist ein solches konfokales Mikroskop dadurch gekennzeichnet, dass zum Umschalten von einer durch das Objektiv erfolgenden Objekt-Auflichtbeleuchtung auf eine in Richtung des Objektivs erfolgenden Objekt-Durchtlichtbeleuchtung auf der dem Objektiv abgewandten Seite der Objektebene Strahlumlenkmittel und gegebenenfalls Strahlformmittel einbringbar sind.

Erfindungsgemäß ist zunächst erkannt worden, dass eine bekannte Anordnung einer Objekt-Auflichtbeleuchtungsanordnung eines konfokalen Mikroskops mit nur einer Scaneinrichtung auch im Objekt-Durchlichtbeleuchtungsmodus betrieben werden kann, wenn auf der dem Objektiv abgewandten Seite der Objektebene Strahlumlenkmittel und/oder Strahlformmittel in den Strahlengang eingebracht werden. Durch die Strahlumlenkmittel wird das zur Beleuchtung dienende Licht umgelenkt bzw. reflektiert, d.h. das vom Objektiv kommende Beleuchtungslicht der Lichtquelle passiert das Objekt und trifft auf die Strahlumlenkmittel auf, wird davon reflektiert und beleuchtet das Objekt nunmehr von der dem Objektiv abgewandten Seite der Objektebene her, also in Richtung des Objektivs. Hierdurch ist in vorteilhafter Weise keine zweite Scaneinrichtung erforderlich, wodurch sich der für eine Objekt-Durchlichtbeleuchtung erforderliche Strahlengang in vorteilhafter Weise vereinfacht. Letztendlich wird durch das Einbringen der Strahlumlenkmittel und gegebenenfalls der Strahlformmittel der Beleuchtungsstrahlengang verlängert, wobei das Beleuchtungslicht nunmehr zweimal den Objektbereich zwischen Objektiv und Strahlumlenkmittel durchläuft.

In einer bevorzugten Ausführungsform ist vorgesehen, dass im Beleuchtungsstrahlengang mindestens ein Mittel zur Variation der objektseitigen Fokuslage des Beleuchtungslichts vorgesehen ist. Dieses Mittel ist vorzugsweise zwischen der Lichtquelle und dem Objektiv im Beleuchtungsstrahlengang angeordnet. Falls nun durch das Einbringen von Strahlumlenkmitteln und gegebenenfalls Strahlformmitteln eine Objekt-Durchlichtbeleuchtung realisiert wird, kann mit Hilfe des Mittels zur Variation der objektseitigen Fokuslage des Beleuchtungslichts eine punktförmige Beleuchtung in der Objektebene des Objektivs realisiert werden. Durch das Mittel zur Variation der objektseitigen Fokuslage des Beleuchtungslichts wird letztendlich die objektseitige Brennweite des Beleuchtungsstrahlengangs an die aktuell eingestellte Beleuchtungsart angepasst. Bei einer konfokalen Objekt-Durchlichtbeleuchtung wird also durch das Mittel zur Variation der objektseitigen Fokuslage des Beleuchtungslichts die objektseitige Brennweite um den optischen Weg verlängert, der dem doppelten Abstand von Objektebene zu Strahlumlenkmittel entspricht.

Vorzugsweise ist das Mittel zur Variation der objektseitigen Fokuslage des Beleuchtungslichts nur im Beleuchtungsstrahlengang angeordnet, d.h. zwischen Lichtquelle und dem den Beleuchtungsstrahlengang und den Detektionsstrahlengang vereinigenden bzw. trennenden Mittel, vorzugsweise jedoch zwischen Scaneinrichtung und dem den Beleuchtungsstrahlengang und den Detektionsstrahlengang vereinigenden bzw. trennenden Mittel.

In bevorzugter Weise umfasst das Mittel zur Variation der Fokuslage eine Variooptik und/oder eine Linse, die in ihrer Position variierbar ist. Die Positionsvariation ist hierbei hauptsächlich entlang der optischen Achse des Beleuchtungsstrahlengangs vorgesehen, eine Positionsvariation quer hierzu oder eine Verkippung der Linse könnte ebenfalls vorgesehen sein. In vorteilhafter Weise könnte als Mittel zur Variation der Fokuslage eine Variooptik eingestzt werden, mit deren Hilfe eventuelle axiale Positionierungsungenauigkeiten des Strahlumlenkmittels kompensiert werden könnten, da die Variooptik stufenlos einstellbar ist.

Alternativ hierzu könnte die Variation der Fokuslage auch durch mindestens eine Linse erfolgen, die in den Beleuchtungsstrahlengang eingebracht wird. Hierbei könnte eine Linse in einem entsprechenden Magazinblock aufgenommen sein und mit der notwendigen Genauigkeit im Beleuchtungsstrahlengang positioniert werden. Weiterhin könnte auch vorgesehen sein, dass eine im Beleuchtungsstrahlengang angeordnete Linse oder Linsengruppe für den Objekt-Auflichtbeleuchtungsmodus durch eine andere Linse bzw. Linsengruppe ersetzt wird, die dann die objektseitige Fokuslage des Beleuchtungslichts auf den Objekt-Durchlichtbeleuchtungsmodus anpasst.

In einer konkreten Ausführungsform ist das Strahlumlenkmittel als Spiegel ausgebildet. So könnte beispielsweise ein nicht planarer, den Abbildungseigenschaften angepasster Spiegel verwendet werden. Alternativ wäre ein Hohlspiegel, insbesondere ein sphärischer oder asphärischer Hohlspiegel oder ein Parabolspiegel denkbar. Falls als Strahlumlenkmittel ein Planspiegel verwendet wird, ist zwischen Planspiegel und Objektebene ein Objektiv oder eine Linse vorgesehen. Die Wirkung des Planspiegels in Verbindung mit dem Objektiv oder der Linse entspricht hierbei weitgehend der eines Hohlspiegels.

In einer konkreten Ausführungsform ist das Strahlumlenkmittel und gegebenenfalls das Strahlformmittel durch eine Positioniereinrichtung justierbar. Hierdurch kann beispielsweise sichergestellt werden, dass die ins Objekt abgebildete konfokale Beleuchtungslochblende optisch konjugiert zum konfokalen Detektionslochblende ist. Die Positioniereinrichtung ist vorzugsweise in drei Raumrichtungen verfahrbar und/oder um zwei Achsen verkippbar, so dass genügend Freiheitsgrade zur erfolgreichen Justierung des Strahlumlenkmittels und gegebenenfalls des Strahlformmittels gegeben sind.

In ganz besonders bevorzugter Weise ist vorgesehen, dass das Beleuchtungslicht sowohl bei der Objekt-Durchlichtbeleuchtung als auch bei der Objekt-Auflichtbeleuchtung im Objetkbereich nur einmal fokussiert wird. Geht man von einer Objekt-Auflichtbeleuchtung aus, so ist eine Abbildung der Beleuchtungslochblenden des konfokalen Scheibenscanners bzw. der konfokalen Beleuchtungslochblende in die Objektebene des Objektivs vorgesehen. Hierbei wird das Beleuchtungslicht im Objektbereich einmal fokussiert. Falls nun zur Realisierung einer Objekt-Durchlichtbeleuchtung Strahlumlenkmittel und gegebenenfalls Strahlformmittel in den Beleuchtungsstrahlengang eingebracht werden, könnte - eine entsprechende Konfiguration der Strahlumlenkmittel bzw. Strahlformmittel vorausgesetzt - das vom Objektiv bzw. Objekt kommende, divergierende Licht in sich selbst reflektiert werden, wodurch - bei ebenfalls entsprechender Konfiguration - ein erneutes Fokussieren des Beleuchtungslichts in der Objektebene des Mikroskopobjektivs erfolgen könnte. In bevorzugter Weise ist der Beleuchtungsstrahlengang bei der Objekt-Durchlichtbeleuchtung derart konfiguriert, dass das Beleuchtungslicht erst nach Reflexion am Strahlumlenkmittel in die Objektebene des Objektivs fokussiert wird. Dies könnte beispielsweise mit Hilfe des Mittels zur Variation der objektseitigen Fokuslage des Beleuchtungslichts erfolgen.

Das den Beleuchtungs- und Detektionsstrahlengang vereinigende und/oder trennende Mittel könnte ein Polarisationsstrahlteiler oder ein wellenlängenspezifischer bzw. dichroitischer Strahlteiler sein. Falls ein Polarisationsstrahlteiler zum Einsatz kommt, sind polarisierende und/oder polarisationsändernde Bauteile im Strahlengang vorgesehen. Üblicherweise handelt es sich hierbei um einen der Lichtquelle nachgeordneten Polarisator, um eine beispielsweise zwischen Strahlumlenkmittel und Objekt angeordnete λ/4-Platte sowie um einen Analysator. Für die Objekt-Auflichtbeleuchtung könnte eine λ/4-Platte zwischen Polarisationsstrahlteiler und Objektiv angeordnet sein. Letztendlich wird durch die polarisierenden und/oder polarisationsändernden Bauteile im Strahlengang das Ausblenden des Beleuchtungslichts aus dem Detektionsstrahlengang erzielt, so dass lediglich das vom Objekt kommende Detektionslicht dem Detektor oder dem Auge des Mikroskopbedieners zugeleitet wird.

Falls als Strahlteiler ein wellenlängenspezifischer bzw. dichroitischer Strahlteiler vorgesehen ist, könnten weitere geeignete Filter und/oder Strahlteiler vorgesehen sein, so dass hierdurch Fluoreszenzobjekte mit dem konfokalen Mikroskop detektiert bzw. aufgenommen werden können. Bei geeigneter Lichtquelle und Auswahl der vorgesehenen Filtersätze bzw. wellenlängenspezifischen Strahlteiler können Fluoreszenzobjekte oder Fluoreszenzfarbstoffe mit Hilfe der Mehrphotonen-Fluoreszenzanregung angeregt werden. Insbesondere bei einem nur einmaligen Fokussieren des Anregungslichts bei der Objekt-Durchlichtbeleuchtung wird nur in der Objektebene des Objektivs Fluoreszenz angeregt, so dass insbesondere bei biomedizinischen Fluoreszenzmarkierungen ein Ausbleichen der Fluoreszenzmarker in besonders vorteilhafter Weise weitgehend vermieden wird.

Nun kann als Scanvorrichtung eine Nipkow-Disk dienen. Diese üblicherweise kreisrunde Scheibe weist vorzugsweise spiralenförmig angeordnete Lochblenden bzw. Löcher auf. Dabei könnte zur Erhöhung der Beleuchtungseffizienz jedem Pinhole der Nipkow-Disk eine Mikrolinse zugeordnet sein, so dass - ähnlich der aus der EP 0 727 684 A2 bekannten Vorrichtung - das Beleuchtungslicht auf die einzelnen Pinholes fokussiert wird. Die numerische Apertur der Mikrolinse ist hierbei an die numerische Apertur des Mikroskopobjektivs angepasst. Zur praktischen Realisierung könnte eine "Mikrolinsen-Disk" vorgesehen sein, die zur Nipkow-Disk parallel und axial versetzt angeordnet ist, wobei beide Disks von einem entsprechenden Motor gleichzeitig gedreht werden.

Weiterhin könnte die Scanvorrichtung als Reflektionsscheibenscanner gemäß der DE 44 37 896 C1 ausgebildet sein. Hierbei wird in vorteilhafter Weise das von der Lichtquelle am Reflektionsscheibenscanner reflektierte Licht zur Objektbeleuchtung verwendet; das am Reflektionsscheibenscanner nicht reflektierte Licht könnte nach entsprechender Transmission von einer hinter dem Reflektionsscheibenscanner angeordneten Lichtfalle absorbiert werden. Somit kann der Anteil des vom Reflektionsscheibenscanner erzeugten Streulichts der Lichtquelle minimiert werden, so dass möglichst wenig Streulicht dem Detektionslicht überlagert ist. Weiterhin kann durch den Einsatz eines Reflektionsscheibenscanners die Baugröße gering gehalten werden.

Schließlich könnte die Scaneinrichtung auch als Spiegelscanner ausgebildet sein, vorzugsweise mit einer Spiegelanordnung, die aus der DE 196 54 210 A1 bekannt ist. In diesem Fall ist zum Erzielen einer konfokalen Abbildung eine Detektionslochblende und gegebenenfalls eine Beleuchtungslochblende im Strahlengang des Mikroskops vorgesehen.

Grundsätzlich ist vorgesehen, dass sowohl das Beleuchtungslicht als auch das Detektionslicht jeweils durch die gleichen Lochblenden der Nipkow-Disk hindurchtritt, um zum Detektor gelangen zu können. Im Fall des Reflektionsscheibenscanners ist eine Beleuchtung bzw. Detektion des gleichen Scheibenbereichs vorgesehen. Vorzugsweise trifft jedoch das Beleuchtungslicht in einem anderen Bereich des Scheibenscanners auf als das Detektionslicht. So könnte beispielsweise das Beleuchtungslicht einen Bereich des Scheibenscanners beleuchten und das vom Objekt kommende Detektionslicht könnte aufgrund der Strahlführung des Detektions-strahlengangs einen Bereich des Scheibenscanners beleuchten, der punktsymmetrisch bezogen zur Rotationsachse des Scheibenscanners zum Beleuchtungsbereich ist.

In ganz besonders vorteilhafter Weise ist vorgesehen, ein Mikroskop zu einem konfokalen Mikroskop nachzurüsten, indem an das Mikroskop ein Nachrüstsatz adaptiert wird. Dieser Nachrüstsatz könnte zumindest eine Scaneinrichtung, Strahlumlenkmittel und gegebenenfalls Strahlformmittel umfassen, so dass das konventionelle Mikroskop zu einem konfokalen Real-Time-Mikroskop aufgerüstet werden kann.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Patentansprüche und andererseits auf die nachfolgende Erläuterung der bevorzugten Ausführungsbeispiele der Erfindung anhand der Zeichnung zu verweisen. In Verbindung mit der Erläuterung der bevorzugten Ausführungsbeispiele der Erfindung anhand der Zeichnung werden auch im allgemeinen bevorzugte Ausgestaltungen und Weiterbildungen der Lehre erläutert. In der Zeichnung zeigen in schematischer Darstellung:
- Fig.1:: ein bekanntes konfokales Mikroskop;
- Fig. 2:: ein erstes Ausführungsbeispiel der vorliegenden Erfindung;
- Fig. 3:: ein zweites Ausführungsbeispiel der vorliegenden Erfindung und
- Fig. 4:: ein drittes Ausführungsbeispiel der vorliegenden Erfindung.

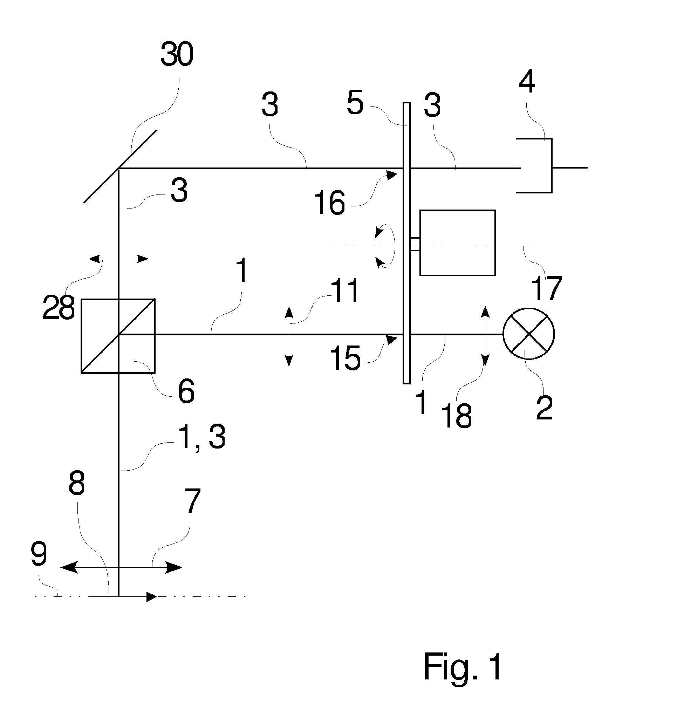

Die Fig. 1 bis 4 zeigen ein konfokales Mikroskop mit einem Beleuchtungsstrahlengang 1 einer Lichtquelle 2 und einem Detektionsstrahlengang 3 eines Detektors 4. Weiterhin weisen die konfokalen Mikroskope eine Scaneinrichtung 5, ein Mittel 6 zum Vereinigen und Trennen des Beleuchtungsstrahlengangs 1 und des Detektions-strahlengangs 3 sowie ein Objektiv 7 auf. In Fig. 1 wird das Objekt 8 mittels Objekt-Auflichtbeleuchtung durch das Objektiv 7 beleuchtet.

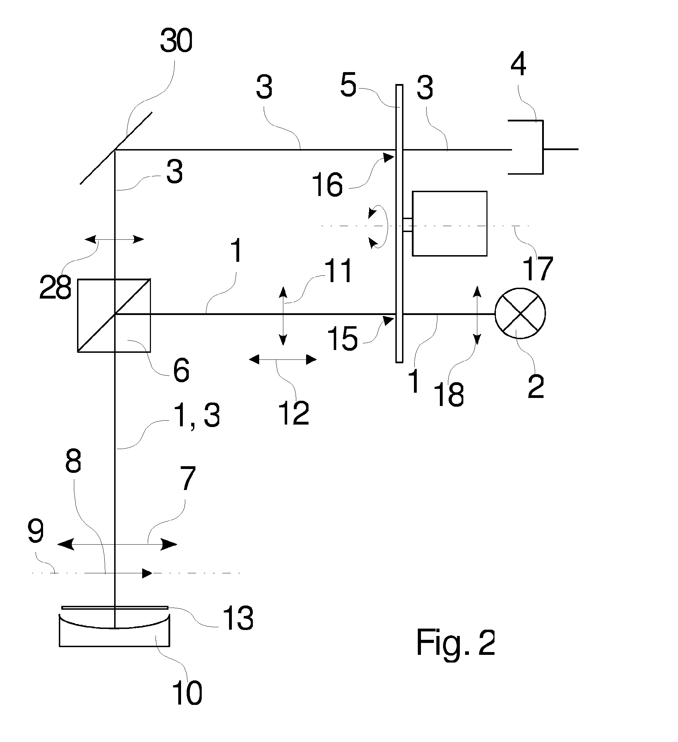

Erfindungsgemäß sind zum Umschalten von einer durch das Objektiv 7 erfolgenden Objekt-Auflichtbeleuchtung auf eine in Richtung des Objektivs 7 erfolgenden Objekt-Durchtlichtbeleuchtung auf der dem Objektiv 7 abgewandten Seite der Objektebene 9 Strahlumlenkmittel 10 und gegebenenfalls Strahlformmittel einbringbar, was in den Fig. 2 bis 4 gezeigt ist. Das in Fig. 1 gezeigte konfokale Mikroskop mit einer Objekt-Auflichtbeleuchtung kann durch Einschwenken der Strahlumlenkmittel 10 in den Strahlengang beispielsweise in das in Fig. 2 gezeigte erfindungsgemäße konfokale Mikroskop umgeschaltet werden.

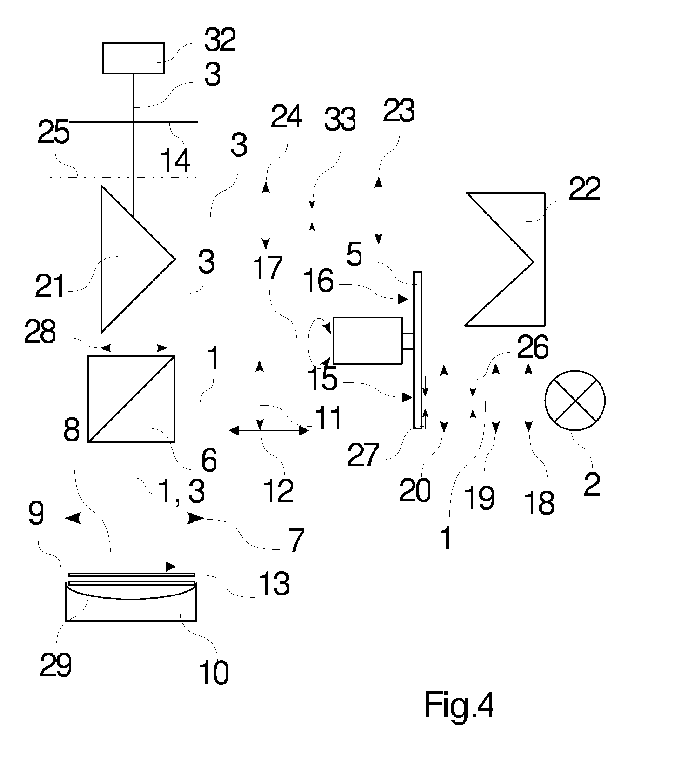

In den Fig. 2 und 4 ist im Beleuchtungsstrahlengang 1 eine Linse 11 zur Variation der objektseitigen Fokuslage des Beleuchtungslichts vorgesehen. So wird durch das Verschieben der Linse 11 entlang der Richtung 12 der Beleuchtungsstrahlengang auf den jeweiligen Objekt-Beleuchtungsmodus eingestellt, was beispielsweise ein Vergleich der Fig. 1 mit Fig. 2 zeigt.

Das Strahlumlenkmittel 10 ist als Hohlspiegel ausgebildet. Die Mittel 6 zum Vereinigen und Trennen des Beleuchtungsstrahlengangs 1 und des Detektionsstrahlengangs 3 ist in den Fig. 1 bis 3 als wellenlängenspezifischer Strahlteiler ausgebildet, so dass hierbei Fluoreszenzobjekte detektiert werden können. Bei dem in Fig. 4 gezeigten Ausführungsbeispiel ist das Mittel 6 als Polarisationsstrahlteiler ausgebildet. Demgemäß ist zum Drehen der Polarisationsrichtung um 90° zwischen Objektebene 9 und Hohlspiegel 10 eine λ/4-Platte 13 angeordnet. Der Analysator 14 ist im Detektionsstrahlengang 3 angeordnet und lässt lediglich das vom Objekt 8 reflektierte Licht passieren.

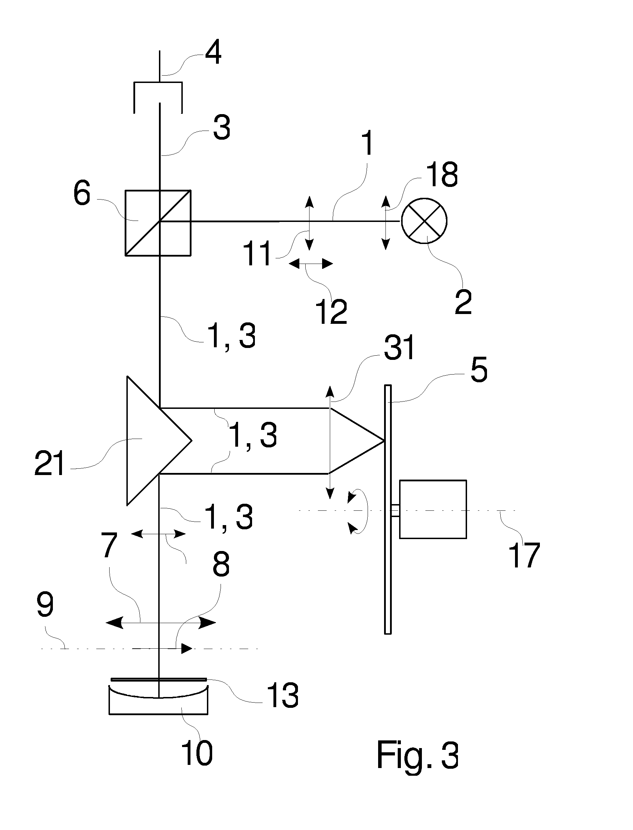

Die Scaneinrichtungen 5 aus den Fig. 1, 2 und 4 sind als Nipkow-Disks, die Scaneinrichtung 5 aus Fig. 3 ist als Reflektionsscheibenscanner ausgebildet.

Den Fig.1, 2 und 4 ist entnehmbar, dass das Beleuchtungslicht in einem Bereich 15 die Nipkow-Disk passiert. Das Detektionslicht hingegen wird über den Spiegel 30 derart gleitet, dass es auf die Nipkow-Disk in einem anderen Bereich 16 auftritt. Dieser Bereich 16 ist bezüglich der Rotationsachse 17 punktsymmetrisch zum Bereich 15 angeordnet. In Fig. 3 wird durch Linse 31 und ein verspiegeltes Prisma 21 das Beleuchtungs- und Detektionslicht auf den selben Bereich des Reflexionsscheibenscanners geleitet.

Im folgenden wird auf die in Fig. 4 etwas detaillierter dargestellten Komponenten eingegangen. Die Lichtquelle 2 wird mittels des Kollektors 18 und der Linsen 19, 20 derart abgebildet, dass auf der Nipkow-Disk eine homogen ausgeleuchtete Fläche entsteht. Die Linse 11 bildet jeden einzelnen ausgeleuchteten Punkt der Nipkow-Disk nach Unendlich ab. Unterschiedliche Punkte der Nipkow-Disk treffen als parallele Strahlenbündel mit unterschiedlichen Winkeln auf das semitransparente Objekt 8.

Der Hohlspiegel 10 ist von seiner Brennweite so bemessen, dass die unter verschiedenen Winkeln auftreffenden Strahlenbündel an unterschiedlichen Punkten im Objekt 8 fokussiert werden. Hierdurch entsteht eine punktförmige Beleuchtung als Abbildung der Nipkow-Disk im Objekt 8 in einer Objekt-Durchlichtbeleuchtung. Eine Streuscheibe 29 kann in den Strahlengang eingebracht werden, um die Konfokalität zu vermindern und somit den Tiefenschärfenbereich der Abbildung zu erhöhen. Die Streuscheibe 29 könnte beispielsweise als ein computergeneriertes Hologramm ausgeführt sein.

Das vom Objekt 8 kommende Detektionslicht durchläuft das Objektiv 7, das Mittel 6 zum Vereinigen und Trennen vom Beleuchtungsstrahlengang 1 und Detektionsstrahlengang 3, wird vom verspiegelten Prisma 21 ein erstes Mal reflektiert und hierdurch auf den Bereich 16 auf der Nipkow-Disk geleitet. Nur das vom Objekt 8 kommende Licht, das unmittelbar aus der Objektebene 9 kommt und ein entsprechendes Pinhole der Nipkow-Disk passieren kann, wird von dem Retro-Prisma 22 zweimal reflektiert. Durch die Linsen 23, 24 wird ein Zwischenbild an der üblichen Stelle im Mikroskop - und zwar in der Zwischenbildebene 25 - erzeugt.

Weiterhin sind in Fig. 4 die Aperturblende 26, die Leuchtfeldblende 27 und die Tubuslinse 28 eingezeichnet. Auf der dem Objektiv abgewandten Seite des Analysators 14 ist eine CCD-Kamera 32 angeordnet.

Falls das in Fig. 4 gezeigte konfokale Mikroskop im Objekt-Auflichtbeleuchtungsmodus betrieben wird, ist Linse 11 entlang der Richtung 12 derart zu verschieben, dass das Lochraster der Nipkow-Disk in die Objektebene 9 abgebildet wird. Der Hohlspiegel 10 und die λ/4-Platte 13 werden aus dem Strahlengang geschwenkt. Der Detektionsstrahlengang 3 ist in diesem Fall gleich dem des Objekt-Durchlichtbeleuchtungsmodus. Die Streulichtblende 33 dient der Unterdrückung des von der Nipkow-Disk hervorgerufenen Streulichts.

Abschließend sei ganz besonders darauf hingewiesen, dass die voranstehend erörterten Ausführungsbeispiele lediglich zur Beschreibung der beanspruchten Lehre dienen, diese jedoch nicht auf die Ausführungsbeispiele einschränken.

### Bezugszeichenliste

- 1: Beleuchtungsstahlengang
- 2: Lichtquelle
- 3: Detektionsstrahlengang
- 4: Detektor
- 5: Scaneinrichtung
- 6: Mittel zum Vereinigen und Trennen von (1) und (3)
- 7: Objektiv
- 8: Objekt
- 9: Objektebene
- 10: Strahlumlenkmittel, Hohlspiegel
- 11: Linse
- 12: Verschiebungsrichtung von (11)
- 13: λ/4-Platte
- 14: Analysator
- 15: Bereich
- 16: Bereich
- 17: Rotationsachse von (5)
- 18: Kollektor
- 19: Linse
- 20: Linse
- 21: verspiegeltes Prisma
- 22: Retro-Prisma
- 23: Linse
- 24: Linse
- 25: Zwischenbildebene
- 26: Aperturblende
- 27: Leuchtfeldblende
- 28: Tubuslinse
- 29: Streuscheibe
- 30: Spiegel
- 31: Linse
- 32: CCD-Kamera
- 33: Streulichtblende

## Patentansprüche

1. Konfokales Mikroskop, mit einem Beleuchtungsstrahlengang (1) einer Lichtquelle (2), einem Detektionsstrahlengang (3) eines Detektors (4), einer Scaneinrichtung (5), einem den Beleuchtungsstrahlengang (1) und den Detektionsstrahlengang (3) vereinigenden bzw. trennenden Mittel (6) und einem Objektiv (7), **dadurch gekennzeichnet, dass** zum Umschalten von einer durch das Objektiv (7) erfolgenden Objekt-Auflichtbeleuchtung auf eine in Richtung des Objektivs (7) erfolgenden Objekt-Durchlichtbeleuchtung auf der dem Objektiv (7) abgewandten Seite der Objektebene (9) Strahlumlenkmittel (10) und gegebenenfalls Strahlformmittel einbringbar sind.

2. Mikroskop nach Anspruch 1, **dadurch gekennzeichnet, dass** im Beleuchtungsstrahlengang (1) - vorzugsweise zwischen Lichtquelle (2) und Objektiv (7) - mindestens ein Mittel zur Variation der objektseitigen Fokuslage des Beleuchtungslichts vorgesehen ist.

3. Mikroskop nach Anspruch 2, **dadurch gekennzeichnet, dass** das Mittel zur Variation der Fokuslage eine Vario-Optik und/oder eine Linse (11) umfasst, die in ihrer Position variierbar ist.

4. Mikroskop nach Anspruch 2, **dadurch gekennzeichnet, dass** die Mittel zur Variation der Fokuslage mindestens eine Linse umfasst, die in den Beleuchtungsstrahlengang (1) einbringbar ist.

5. Mikroskop nach einem der Ansprüche 1 bis 4, **dadurch gekennzeichnet, dass** das Strahlumlenkmittel (10) als Spiegel ausgebildet ist.

6. Mikroskop nach Anspruch 5, **dadurch gekennzeichnet, dass** der Spiegel
- als nicht planarer, den Abbildungseigenschaften angepasster Spiegel,
- als sphärischer oder asphärischer Hohlspiegel oder
- als Parabolspiegel
ausgebildet ist.

7. Mikroskop nach einem der Ansprüche 1 bis 6, **dadurch gekennzeichnet, dass** das Strahlformmittel als Linse oder Objektiv ausgebildet ist.

8. Mikroskop nach einem der Ansprüche 1 bis 7, **dadurch gekennzeichnet , dass** das Strahlumlenkmittel (10) und gegebenenfalls das Strahlformmittel durch eine Positioniereinrichtung justierbar ist, vorzugsweise in drei Raumrichtungen verfahrbar und/oder um zwei Achsen verkippbar.

9. Mikroskop nach einem der Ansprüche 1 bis 8, **dadurch gekennzeichnet, dass** das Beleuchtungslicht sowohl bei der Objekt-Durchlichtbeleuchtung als auch bei der Objekt-Auflichtbeleuchtung im Objektbereich nur einmal fokussiert.

10. Mikroskop nach einem der Ansprüche 1 bis 9, **dadurch gekennzeichnet, dass** das den Beleuchtungsstrahlengang (1) und den Detektionsstrahlengang (3) vereinigende bzw. trennende Mittel (6) ein Polarisationsstrahlteiler oder ein wellenlängenspezifischer (dichroitischer) Strahlteiler ist.

11. Mikroskop nach Anspruch 10, **dadurch gekennzeichnet, dass** zum Trennen des Beleuchtungslichts vom Detektionslicht polarisierende (6, 14) und/oder polarisationsändernde - vorzugsweise polarisationsdrehende - Bauteile im Strahlengang vorgesehen sind.

12. Mikroskop nach einem der Ansprüche 1 bis 9, **dadurch gekennzeichnet, dass** Filter und/oder Strahlteiler zur Fluoreszenzmikroskopie, insbesondere zur Mehrphotonen-Fluoreszenz, vorgesehen sind.

13. Mikroskop nach einem der Ansprüche 1 bis 12, **dadurch gekennzeichnet, dass** die Scaneinrichtung (5) als Nipkow-Disk ausgebildet ist.

14. Mikroskop nach Anspruch 13, **dadurch gekennzeichnet, dass** jedem Pinhole der Nipkow-Disk mindestens eine Mikrolinse zugeordnet ist.

15. Mikroskop nach einem der Ansprüche 1 bis 12, **dadurch gekennzeichnet, dass** die Scaneinrichtung (5) als Reflexionsscheibenscanner ausgebildet ist.

16. Mikroskop nach einem der Ansprüche 1 bis 12, **dadurch gekennzeichnet, dass** die Scaneinrichtung als Spiegelscanner ausgebildet ist.

17. Mikroskop nach einem der Ansprüche 12 bis 15, **dadurch gekennzeichnet, dass** das Beleuchtungslicht in einem anderen Bereich des Scheibenscanners auftrifft als das Detektionslicht.

18. Mikroskop, das zu einem konfokalen Mikroskop nachrüstbar ist, **dadurch gekennzeichnet, dass** ein an das Mikroskop adaptierbarer Nachrüstsatz vorgesehen ist, der zumindest eine Scaneinrichtung (5), Strahlumlenkmittel (10) und gegebenenfalls Strahlformmittel nach einem der Ansprüche 1 bis 17 umfasst.
